Europäisches Patentamt

(19) European Patent Office

Office européen des brevets

(11) Veröffentlichungsnummer: **0 162 150**
**B1**

(12) **EUROPÄISCHE PATENTSCHRIFT**

(45) Veröffentlichungstag der Patentschrifft:
28.02.90

(21) Anmeldenummer: 84116132.6

(22) Anmeldetag: 21.12.84

(51) Int. Cl. ⁵: **H 02 K 21/14, G 04 C 15/00**

(54) **Motor.**

(30) Priorität: 23.05.84 DE 3419100

(43) Veröffentlichungstag der Anmeldung:
27.11.85 Patentblatt 85/48

(45) Bekanntmachung des Hinweises auf die Patenterteilung:
28.02.90 Patentblatt 90/09

(84) Bennante Vertragsstaaten:
DE FR GB IT NL SE

(56) Entgegenhaltungen:
DE-B-2 348 107
GB-A-2 054 978
GB-B-2 003 677

(73) Patentinhaber: VDO Adolf Schindling AG
Gräfstrasse 103
D-6000 Frankfurt/Main 90 (DE)

(72) Erfinder: Sudler, Roland
Gr. Seestrasse 8
D-6000 Frankfurt/Main (DE)

(74) Vertreter: Klein, Thomas, Dipl.-Ing. (FH)
Sodener Strasse 9 Postfach 6140
D-6231 Schwalbach a. Ts. (DE)

LIBERGRAF, STOCKHOLM 1990

**Beschreibung**

Die Erfindung bezieht sich auf einen Motor zum Antrieb eines Uhrwerks, mit einem drehbar gelagerten Rotor, der sich diametral gegenüberliegende Dauermagnetpole aufweist, mit einer mehrphasigen Spulenanordnung zur Erzeugung eines den Rotor aus seiner jeweiligen Lage auslenkenden Magnetfelds in Abhängigkeit von jeweils an den Spulen der Spulenanordnung anliegenden Ansteuersignalen.

Aus der GB-A-2 054 978 ist ein derartiger Motor bekannt, bei dem zwei Spulen in einem Winkel zueinander angeordnet sind und Segmente des Rotors umschließen. Die Ansteuerung der Spulen führt zu einem Magnetfeld im Bereich des Rotors, das vier verschiedene Richtungen einnehmen kann. Damit kann der Zeiger keine gleichmäßige ruhige Drehbewegung ausführen, sondern nur sprunghafte Bewegungen ausführen.

Aufgabe der Erfindung ist es, einen Motor nach dem Oberbegriff zu schaffen, dessen Zeiger eine gleichmäßige ruhige Drehbewegung vollführen.

Diese Aufgabe wird erfindungsgemäß dadurch gelöst, daß die Spulenanordnung mehrere mit gleichem Winkelabstand zueinander angeordnete, den Rotor zentrisch umschließende Spulen aufweist, die jeweils mit um einen bestimmten Winkel versetzten Sinusspannungen nacheinander ansteuerbar sind. Diese Ausbildung führt zu einem kontinuierlichen Antrieb, so daß Zahnräder und Zeiger keine Schlaggeräusche erzeugen können. Die Zeiger vollführen eine gleichmäßige ruhige Drehbewegung.

In einer vorteilhaften Ausbildung einfachen Aufbaus kann die Spulenanordnung aus zwei rechtwinklig zueinander angeordneten Spulen bestehen, die mit zwei um 90° versetzten Sinusspannungen ansteuerbar sind.

Ohne wesentlichen Aufwand und zusätzlichem Platzbedarf kann die Reihenfolge der Ansteuerung der Spulen umkehrbar und damit das Uhrwerk zum Einstellen in beide Drehrichtungen antreibbar sein.

Ist die Ansteuerfrequenz der Spulen veränderbar, so wird ohne wesentlichen Platz- und Bauteileaufwand eine Schnellverstellung der Uhr erreicht. Vorzugsweise ist dabei die Ansteuerfrequenz der Spulen vergrößerbar.

Ist die Drehachse des Rotors die Sekundenwelle bzw. die Minutenwelle des Uhrwerks, so wird ein Direktantrieb erreicht und es kann auf das sonst übliche Getriebe verzichtet werden. Dies führt sowohl zu einer Geräusch und Bauraumminderung als auch zur Reduzierung an Bauteilen.

Zur Ansteuerung der Spulen mit Sinusspannungen kann von einem Schwingungssystem je ein Sinuserzeuger für jede Spule beaufschlagbar sein, durch den die jeweilige Spule mit einer Sinusspannung ansteuerbar ist. Dabei ist vorzugsweise den Sinuserzeugern ein gemeinsamer Frequenzteiler vorgeschaltet.

Ist das Teilungsverhältnis des Frequenzteilers änderbar, kann dadurch eine Erhöhung bzw. Verringerung der Antriebsgeschwindigkeit und somit eine elektrische Zeitverstellung des Uhrwerks erreicht werden.

Den Sinuserzeugern ist eine Endstufe nachgeschaltet, durch die die Spulen ansteuerbar sind. Ist dabei die Reihenfolge der von der Endstufe abgebbaren Ansteuersignale umkehrbar, so ist eine Verstellung des Uhrwerks in beide Drehrichtungen möglich.

Da der aus Spulen und Rotor bestehende Motor zentrisch zum Ziffernblatt angeordnet werden kann, ergibt sich eine Verringerung des erforderlichen Einbaudurchmessers und somit des benötigten Einbauraumes.

Ein Ausführungsbeispiel der Erfindung ist in der Zeichnung dargestellt und wird im folgenden näher beschrieben. Es zeigen

Figur 1 ein Uhrwerk mit einem Motor,
Figur 2 ein Blockschaltbild der Ansteuerung des Motors nach Figur 1,
Figur 3 ein Ansteuerdiagramm der Spannung über dem Drehwinkel des Motors nach Figur 1,
Figur 4 Ansteuerung der Spulen und Stellung des Rotors in 8 Ansteuerpositionen.

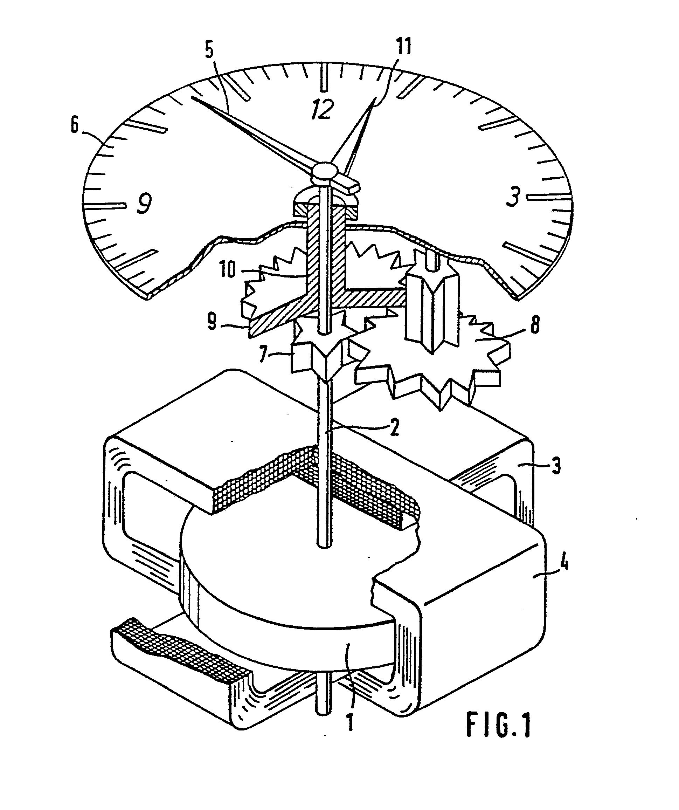

Der in Figur 1 dargestellte Motor besteht aus einem drehbar gelagerten Rotor 1 mit einer Drehachse 2, der sich diametral gegenüberliegende Dauermagnetpole aufweist.

Der Motor besitzt weiterhin eine Spulenanordnung, die aus zwei rechtwinklig zueinander angeordneten den Rotor 1 umschließenden Spulen 3 und 4 besteht.

Am oberen Ende der Drehachse 2 ist ein Minutenzeiger 5 befestigt, der über ein Ziffernblatt 6 bewegbar ist.

Über ein auf der Drehachse 2 angeordnetes Antriebsritzel 7 und ein Wechselrad 8 ist ein Stundenrad 9 antreibbar, das ein die Drehachse 2 umschließendes Stundenrohr 10 besitzt.

An dem Stundenrohr 10 ist ein ebenfalls über das Ziffernblatt 6 bewegbarer Stundenzeiger 11 befestigt.

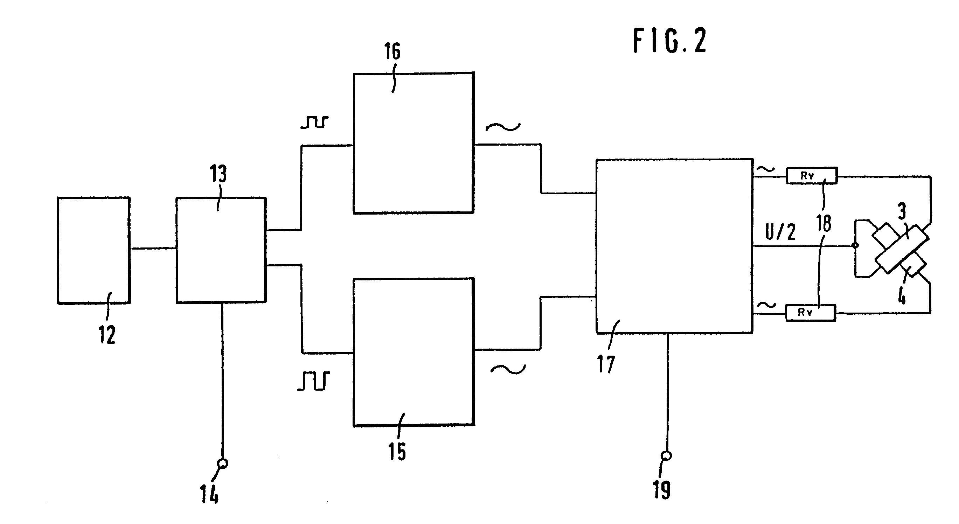

Die in Figur 2 dargestellte Ansteuerung des Motors besitzt einen Quarz als Schwingungssystem 12, durch das ein Frequenzteiler 13 mit einer Frequenz beaufschlagt wird. Über einen Verstellkontakt 14 ist das Teilungsverhältnis des Frequenzteilers 13 dahingehend änderbar, daß eine Frequenz von z. B. 0,01666 Hz bei Normalbetrieb auf eine Frequenz von z. B. 25 Hz erhöht wird. Dies entspricht einer Drehzahlerhöhung von einer Umdrehung pro Minute auf eine Drehzahl von 1500 Umdrehungen pro Minute der Drehachse 2.

Mit dieser Frequenz werden zwei Sinuserzeuger 15 und 16 beaufschlagt, von denen jeder in Abhängigkeit von der Frequenz eine Sinusspannung erzeugt, welche einer Endstufe 17 zugeleitet werden.

Über Vorwiderstände 18 erfolgt eine Beaufschlagung der Spulen 3 und 4, jeweils mit einer der erzeugten Sinusspannungen, wobei diese Sinusspannungen um 90° versetzt zueinander sind.

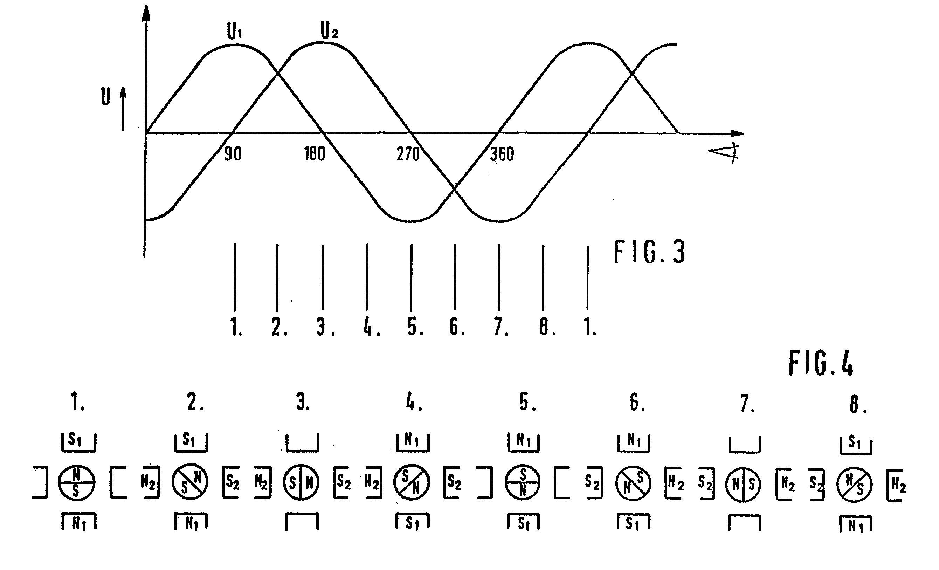

Dies ist in Figur 3 im Diagramm dargestellt. $U_1$ ist dabei die die Spule 3 und $U_2$ die die Spule 4 beaufschlagende Sinusspannung.

Durch den Verstellkontakt 19 der Endstufe ist die Reihenfolge der Ansteuerung der Spulen 3 und 4 und somit die Drehrichtung der Zeiger 5 und 11 umkehrbar.

Die in Figur 3 unterhalb der Spannungskurven aufgeführten Drehwinkelpositionen 1 bis 8 entsprechen die Ansteuerpositionen der Spulen 3 und 4 und die Stellungen des Rotors 1 in Figur 4.

## Patentansprüche

1. Motor zum Antrieb eines Uhrwerks, mit einem drehbar gelagerten Rotor, der sich diametral gegenüberliegende Dauermagnetpole aufweist, mit einer mehrphasigen Spulenanordnung zur Erzeugung eines den Rotor aus seiner jeweiligen Lage auslenkenden Magnetfelds in Abhängigkeit von jeweils an den Spulen der Spulenanordnung anliegenden Ansteuersignalen *dadurch gekennzeichnet,* daß die Spulenanordnung mehrere mit gleichem Winkelabstand zueinander angeordnete, den Rotor (1) zentrisch umschließende Spulen (3, 4) aufweist, die jeweils mit um einen bestimmten Winkel versetzten Sinusspannungen nacheinander ansteuerbar sind.

2. Motor nach Anspruch 1, *dadurch gekennzeichnet,* daß die Spulenanordnung aus zwei rechtwinklig zueinander angeordneten Spulen (3, 4) besteht, die mit zwei um 90° versetzten Sinusspannungen ansteuerbar sind.

3. Motor nach einem der vorhergehenden Ansprüche, *dadurch gekennzeichnet,* daß die Reihenfolge der Ansteuerung der Spulen (3, 4) umkehrbar ist.

4. Motor nach einem der vorhergehenden Ansprüche, *dadurch gekennzeichnet,* daß die Ansteuerfrequenz der Spulen (3, 4) veränderbar ist.

5. Motor nach Anspruch 4, *dadurch gekennzeichnet,* daß die Ansteuerfrequenz der Spulen (3, 4) vergrößerbar ist.

6. Motor nach einem der vorhergehenden Ansprüche, *dadurch gekennzeichnet,* daß die Drehachse des Rotors die Sekundenwelle des Uhrwerks ist.

7. Motor nach einem der Ansprüche 1 bis 5, *dadurch gekennzeichnet,* daß die Drehachse (2) des Rotors (1) die Minutenwelle des Uhrwerks ist.

8. Motor nach einem der vorhergehenden Ansprüche, *dadurch gekennzeichnet,* daß von einem Schwingungssystem (12) je ein Sinuserzeuger (15, 16) für jede Spule (3, 4) beaufschlagbar ist, durch den die jeweilige Spule (3 bzw. 4) mit einer Sinusspannung ansteuerbar ist.

9. Motor nach Anspruch 8, *dadurch gekennzeichnet,* daß den Sinuserzeugern (15, 16) ein gemeinsamer Frequenzteiler (13) vorgeschaltet ist.

10. Motor nach Anspruch 9, *dadurch gekennzeichnet,* daß das Teilungsverhältnis des Frequenzteilers (13) änderbar ist.

11. Motor nach Anspruch 8, *dadurch gekennzeichnet,* daß den Sinuserzeugern (15, 16) eine Endstufe (17) nachgeschaltet ist, durch die die Spulen (3, 4) ansteuerbar sind.

12. Motor nach Anspruch 11, *dadurch gekennzeichnet,* daß die Reihenfolge der von der Endstufe (17) abgebbaren Ansteuersignale umkehrbar ist.

## Revendications

1. Moteur destiné à l'entraînement d'un mécanisme d'horlogerie et comportant un rotor monté à rotation, qui présente des pôles magnétiques permanents placés de façon à être diamétralement opposés et qui comporte un montage de bobines à plusieurs phases, destiné à créer un champ magnétique qui fait se déplacer le rotor à partir de sa situation du moment en fonction des signaux de commande qui sont appliqués dans chaque cas aux bobines du montage de bobines, moteur caractérisé en ce que le montage de bobines présente plusieurs bobines (3, 4) disposées avec un écart angulaire égal entre elles et entourant le rotor (1) de façon concentrique, ces bobines pouvant être commandées successivement au moyen de tensions sinusoïdales décalées d'un certain angle.

2. Moteur selon la revendication 1, caractérisé en ce que le montage des bobines est constitué par deux bobines (3, 4) disposées à angle droit l'une par rapport à l'autre, lesquelles peuvent être commandées au moyen de deux tensions sinusoïdales décalées de 90°.

3. Moteur selon l'une des revendications précédentes, caractérisé en ce que l'ordre de commande des bobines (3, 4) peut être inversé.

4. Moteur selon l'une des revendications précédentes, caractérisé en ce que la fréquence de commande des bobines (3, 4) peut être modifiée.

5. Moteur selon la revendication 4, caractérisé en ce que la fréquence de commande des bobines (3, 4) peut être augmentée.

6. Moteur selon l'une des revendications précédentes, caractérisé en ce que l'axe de rotation du rotor est l'axe des secondes du mécanisme d'horlogerie.

7. Moteur selon l'une des revendications 1 à 5, caractérisé en ce que l'axe (2) de rotation du rotor (1) est l'axe des minutes du mécanisme d'horlogerie.

8. Moteur selon une des revendications précédentes, caractérisé en ce qu'il existe pour chaque bobine 3, 4 un générateur respectif (15, 16) de courant sinusoïdal, qui peut être soumis à un système oscillant (12), et grâce auquel la bobine considérée 3 ou 4, peut être commandée au moyen d'une tension sinusoïdale.

9. Moteur selon la revendication 8, caractérisé en ce qu'un diviseur (13) commun de fréquence est branché en amont des générateurs (15, 16) de courant sinusoïdal.

10. Moteur selon la revendication 9, caractérisé en ce que le rapport de division du diviseur (l3) de fréquence peut être modifié.

11. Moteur selon la revendication 8, caractérisé en ce qu'un étage terminal (17)) au moyen duquel les bobines (3, 4) peuvent être commandées, est branché en aval des générateurs (15, 16) de courant sinusoïdal.

12. Moteur selon la revendication 11, caractérisé en ce que l'ordre des signaux, qui peuvent être délivrés par l'étage terminal (17), peut être inversé.

**Claims**

1. Electrical level sensor for a liquid container, preferably for a fuel tank of a motor vehicle, with two tubes situated one within the other, with a sheet element (4) which carries an electrically conductive layer and which is clamped between two supporting elements (5, 6) which are in the form of half-tubes and form the inner tube, the supporting elements having through apertures for the passage of the liquid, characterised in that the supporting elements (5, 6) are formed of in each case two half-tubes (11, 12) of different width which are connected to one another at their longitudinal sides by radially and axially disposed parts (13, 14), the four half-tubes (11, 12) forming the two tubes situated one within the other, the cylindrical inner hollow space (24) as formed by the smaller half-tubes (12) containing the conductive layer (17) which serves to ascertain the level, and there being formed between the half-tubes (11, 12) in each case a cylindrical outer hollow space (23).

2. Electrical level sensor according to claim 1, characterised in that the outer half-tubes (11), after joining together, together form a tube which has an elliptical cross-section.

3. Electrical level sensor according to claim 1 or 2, characterised in that each supporting element (5, 6) is made in one piece along with the parts (13, 14) which connect it to the other supporting element.

4. Electrical level sensor according to one of the preceding claims, characterised in that the sheet element (4) has at least one electrically conductive layer (17) the resistance of which is temperature-dependent.

5. Electrical level sensor according to one of claims 1 to 3, characterised in that the sheet element has two electrical conductor tracks which extend in the longitudinal direction and which form a capacitor.

6. A motor as claimed in one of the preceding claims, characterised in that the axis of rotation of the rotor is the seconds arbor of the clock movement.

7. A motor as claimed in one of the claims 1 to 5, characterised in that the axis of rotation (2) of the rotor (1) is the minutes arbor of the clock movement.

8. A motor as claimed in one of the preceding claims, characterised in that a respective sine-wave generator (15, 16) for each coil (3, 4) may be acted upon by a vibrating system (12), each coil (3 and 4) being energizable by a sinusoidal voltage by a respective one of the sine-wave generators (15, 16).

9. A motor as claimed in claim 8, characterised in that a common frequency divider (13) is connected on the input side of the sine-wave generators (15, 16).

10. A motor as claimed in claim 9, characterised in that the division ratio of the frequency divider (13) is variable.

11. A motor as claimed in claim 8, characterised in that an output stage (17), by which the coils (3, 4) are energizable, is connected on the output side of the sine-wave generators (15, 16).

12. A motor as claimed in claim 11, characterised in that the sequence of the energizing signals generated by the output stage (17) is reversible.

FIG.1

FIG.2

EP 0 162 150 B1

FIG.3

FIG.4